# EUROPÄISCHE PATENTSCHRIFT

(11) **EP 1 815 970 B1**
(45) Veröffentlichungstag und Bekanntmachung des Hinweises auf die Patenterteilung: **11.11.2009**
(21) Anmeldenummer: 06025881.1
(22) Anmeldetag: 14.12.2006
(51) Int. Cl.: B29C 73/16, B65D 83/14

(54) **Vorrichtung zum Ausbringen von Reifendichtmittel aus einem Behälter**
Device for discharging tire sealant from a container
Dispositif pour expulser d'un récipient un produit colmatant de pneu

(30) Priorität: 07.02.2006 DE 102006005787
(43) Veröffentlichungstag der Anmeldung: 08.08.2007
(73) Patentinhaber: Doukas AG, 8280 Kreuzlingen (CH)
(72) Erfinder: Stehle, Michael, 88662 Überlingen (DE)
(74) Vertreter: Weiss, Peter

(56) Entgegenhaltungen:
- EP-A- 1 419 876
- WO-A-2005/085028
- WO-A1-02/066236
- AU-A- 6 430 474
- DE-A1- 10 337 687
- DE-A1- 19 948 706
- DE-U1- 8 028 239
- DE-U1- 20 113 129
- DE-U1-202004 009 114
- DE-U1-202005 005 291
- US-A- 3 113 698
- US-A- 3 843 586
- US-A- 5 070 917
- US-A- 5 765 601
- US-A- 5 874 138
- US-A- 6 126 044
- US-B1- 6 176 285

## Beschreibung

Die Erfindung betrifft eine Vorrichtung zum Ausbringen von Reifendichtmittel aus einem Behälter, mit einem Verschlusselement mit einem Einlass zum Anschliessen an eine Druckquelle, der bei Überdruck einen Einlassverschluss zu einem Behälterinnenraum des Behälters hin öffnet.

Herkömmliche Vorrichtungen zum Ausbringen von Reifendichtmittel aus Behältern, insbesondere aus druckfesten Behältern sind in vielfältigster Form und Ausführung auf dem Markt bekannt und erhältlich. Handgeräte, ähnlich Aerosoldosen sind beispielsweise aus der US 3,843,586 oder der US 5,765,601 bekannt.

Des weiteren werden Reifenpannensets in Kombination mit einem Kompressor in Fahrzeugen anstelle von Ersatzrädern integriert eingesetzt. Dabei muss der Behälter zumeist mit dem Kompressor kompliziert verbunden und aufgestellt werden, um ein Ausbringen von Reifendichtmittel aus dem Behälter zu gewährleisten. Dabei sind Behältnisse bekannt, die stehend oder über Kopf aufgestellt werden müssen, an eine Druckquelle angeschlossen werden, um Reifendichtmittel aus dem Behälter in einen Fahrzeugreifen im Falle einer Reifenpanne einzupumpen. Ein derartiges Pannenset ist beispielsweise aus der EP 1 419 876 A2 bekannt.

Nachteilig ist bei herkömmlichen Vorrichtungen, dass nur sehr aufwendig mit Ventilen, Umschaltventilen, mechanischen Vorrichtungen etc. der Kompressor an einen Behälter angeschlossen werden kann, um den Behälter mit Druck zu beaufschlagen, um aus diesem Reifendichtmittel in einen defekten Reifen einzupumpen. Zudem sind herkömmliche Reifenpannensets aufwendig zu installieren, kompliziert zu bedienen und viel zu schwer und zu teuer in der Herstellung.

Des weiteren wird in der WO 2005/085028 A1 ein Bausatz zum Aufblasen und Reparieren von aufblasbaren Produkten, vorzugsweise Reifen, gezeigt. Dieser besteht aus einem Gehäuse mit einem Kompressor. In das Gehäuse kann über eine Hülse ein Behälter, der eine abdichtende Flüssigkeit enthält, eingeschraubt werden. Diese Flüssigkeit wird dann über den Kompressor und den Kompressorschlauch in den Reifen gefüllt. Nachteiliger Weise muss die abdichtende Flüssigkeit dabei lange Wege durch Gehäuse und Schläuche zurücklegen. Dabei besteht die Gefahr, dass die abdichtende Flüssigkeit nicht bis in den Reifen oder zur abzudichtenden Stelle gelangt, da sie bereits vorher auf dem weg aushärtet.

Aus der DE 201 13 129 U1 ist ein auswechselbarer Behälter für eine Reifenflickflüssigkeit in einem Reifenflicksatz mit unter angelegtem Luftdruck aufplatzenden Verschlussmembranen bekannt, wobei der Luftdruck direkt durch einen Dichtmittelbehälter geleitet wird und Ein- und Auslassmembranen Teile des Dichtmittelbehälters sind. Unter dem Luftdruck öffnet die Membran der Einlassöffnung und danach unter steigendem Druck die Membran der Auslassöffnung. Das Anbringen der Membranen erfordert einen zusätzlichen Arbeitsaufwand, der kompliziert ist und der sorgfältig durchgeführt werden muss, damit die Membranen frühzeitig öffnen.

Aus der DE 103 37 687 A1 und insbesondere auch aus der DE 20 2004 009 114 U1 ist jeweils ein System zum Abdichten von Kraftfahrzeugreifen bekannt, bei dem der Einlass durch einen Einlassverschluss geschlossen ist und erst nach dem Aufbauen eines bestimmten Drucks freigegeben wird, sodass sich dann im Behälterinneren ein Druck aufbauen kann. Nachteilig dabei ist, dass sofort nach dem Öffnen des Einlassverschlusses Reifendichtmittel auch durch die Auslassöffnung in den Reifen ausfliessen, wobei die Gefahr besteht, dass das Reifendichtmittel zu früh, ggf. sogar in langen Anschlussleitungen zwischen Behälter und Ventil härten kann.

Der vorliegenden Erfindung liegt daher die Aufgabe zugrunde, eine Vorrichtung zum Ausbringen von Reifendichtmittel aus einem Behälter zu schaffen, welche die genannten Nachteile beseitigt, mit welcher auf einfache und kostengünstige Weise sehr schnell Reifendichtmittel direkt in einen defekten Fahrzeugreifen einbringbar ist, ohne dass aufwendige Anschlussarbeiten oder ein kompliziertes Handling vom Benutzer durchgeführt werden muss.

Zur Lösung der Aufgabe führt, dass das Verschlusselement auch einen Auslass mit einem Verschluss aufweist, der bei Erzeugung eines vorbestimmten Überdruckes im Behälter den Verschluss in einer Entnahmeöffnung zum Ausbringen von Reifendichtmittel aus dem Behälter in einen Reifen freigibt.

Bei der vorliegenden Erfindung hat sich als besonders vorteilhaft erwiesen, eine Vorrichtung zum Ausbringen von Reifendichtmittel aus einem Behälter zu schaffen, welche ein Verschlusselement aufweist. Das Verschlusselement ist bevorzugt wiederlösbar mit einem Behälter verbindbar, an welchem eine beliebige Druckquelle, insbesondere ein beliebiger Kompressor anschliessbar ist.

Dabei wird lediglich bei Erreichen eines bestimmten Überdruckes in einem Einlassstutzen ein Einlass zu einem Behälterinnenraum durch Freigeben eines Einlassverschlusses hergestellt, um den Behälterinnenraum mit Druck, insbesondere Luftdruck oder Überdruck zu beaufschlagen. Bevorzugt wird über die Druckquelle ein Druck von 3 bar bis 5 bar im Behälterinnenraum erzeugt.

Der Einlassverschluss selbst kann als Ventil, Rückschlagventil, Stopfen, Klappe, Folie, Verschlussstopfen od. dgl. ausgebildet sein, um lediglich den Einlass zwischen Druckquelle und Behälterinnenraum über das Verschlusselement zu öffnen bzw. freizugeben.

Ist der Behälterinnenraum mit Überdruck beaufschlagt, so lässt sich zum Ausbringen von Reifendichtmittel ein Verschluss, direkt im Bereich des Auslasses, zugewandt zum Behälterinnenraum oder indirekt im Bereich einer Entnahmeeinrichtung bzw. eine Entnahmeöffnung durch Freigeben eines Verschlusses öffnen, so dass Reifendichtmittel direkt über den Auslass, sollte der Behälter auf den Kopf gestellt werden, oder indirekt über ein dazwischen eingesetztes Steigrohr über eine Entnahmeeinrichtung ausgebracht werden kann.

Der Verschluss kann als Klappe, Pfropfen, Stopfen, Ventil, Folie, elastisch verformbares Element od. dgl. ausgebildet sein, um eine Entnahmeöffnung bei Vorliegen eines bestimmten wählbaren Überdruckes im Behälterinnenraum zu öffnen, um das Reifendichtmittel über den Auslass und über den dort anschliessenden Anschlussschlauch in einen Reifen einzupumpen.

Dabei wird der Anschlussschlauch über eine entsprechend ausgebildete Mutter an ein Ventil eines Fahrzeugreifens angeschlossen.

Es hat sich auch als besonders vorteilhaft bei der vorliegenden Erfindung erwiesen, eine Länge des Anschlussschlauches, welcher an das Verschlusselement anschliesst, besonders kurz zu wählen, wie beispielsweise 2 cm bis 8 cm, bevorzugt 3 cm, so dass über den kurz ausgebildeten Anschlussschlauch die Vorrichtung bzw. das Verschlusselement mit Behälter am Reifen bzw. am Ventil des Reifens und durch die Schwerkraft automatisch immer nach unten hängt, so dass eine Lage zur Entnahme des Reifendichtmittels aus dem Behälter vereinfacht und optimiert ist.

Hierdurch kann ein Aufstellen des Behälters auf einem Untergrund oder ein Festlegen des Behälters an einem Kompressor vollständig entfallen. Der Anwender hat hierdurch keine Möglichkeit den Behälter versehentlich in eine Position oder Lage zu versetzen, in der ein Ausbringen von Reifendichtmittel nicht mehr gewährleistet ist. Dies wird exakt über einen besonders kurz ausgebildeten Anschlussschlauch gewährleistet. Dies ist ebenfalls ein grosser Vorteil der vorliegenden Erfindung.

Bei der vorliegenden Erfindung hat sich als äusserst vorteilhaft erwiesen, dass der Schlauch als flexibler Schlauch ausgebildet sein kann. Hierdurch lässt sich der Behälter zur Aufnahme von Reifendichtmittel an ein Ventil eines Fahrzeugreifens anhängen, um ein Dichtmittel aus dem bevorzugt druckfesten Behälter in den Reifen im Pannenfall einzupumpen.

Von Vorteil ist, dass keine zusätzliche Aufstellhilfe oder Anhängehilfe erforderlich ist.

Ferner muss keine starre Verbindung zwischen Behälter zur Aufnahme von Reifendichtmittel und dem Kompressor hergestellt, werden, um den Reifendichtmittelbehälter senkrecht gegenüber dem Untergrund aufzustellen, um anschliessend das Reifendichtmittel über einen sehr langen Schlauch in den Reifen einzupumpen, wie es im Stand der Technik bekannt ist.

Es hat sich bei der vorliegenden Erfindung ferner als vorteilhaft erwiesen, den Behälter zur Aufnahme von Reifendichtmittel länglich und hochdruckfest auszubilden. Dieser kann mit dem bevorzugt kurz gewählten Anschlussschlauch an das Ventil des Reifens direkt angehängt werden. Im Behälter selbst kann ein Steigrohr vorgesehen sein, welches dann das Reifendichtmittel bei Anschliessen einer Druckluftquelle, insbesondere eines Kompressors vollständig in den Reifen einpumpt.

Um weitere Kosten, insbesondere Gewichtskosten einzusparen, kann der Behälter auch als flexibler deformierbarer Beutel ausgebildet sein, der jedoch druckfest ausgebildet ist. Der Beutel kann über den Anschlussschlauch ebenfalls direkt an das Ventil des Reifens angehängt werden, wobei dann im Inneren des Beutels ein Steigrohr vorgesehen ist. Über einen gemeinsamen oder separaten weiteren Anschluss lässt sich an den Beutel eine Druckquelle, insbesondere ein Kompressor anschliessen, um das Reifendichtmittel in den Reifen einzupumpen.

Von Vorteil ist, dass der Beutel flexibel, sehr leicht und gewichtseinsparend ausgeformt werden kann. Im Pannenfall kann dieser nach Gebrauch sehr einfach entsorgt werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte, teilweise aufgeschnittene Ansicht auf eine Vorrichtung zum Ausbringen von Reifendichtmittel aus einem Behälter mit einem Verschlusselement, welches mit dem Behälter verbindbar ist;
Figur 2 eine schematisch dargestellte, teilweise längsquerschnittlich dargestellte Ansicht auf eine Vorrichtung zum Ausbringen von Reifendichtmittel aus einem Behälter mit einem Verschlusselement, welches mit dem Behälter verbunden oder verbindbar ist als weiteres Ausführungsbeispiel gemäss Figur 1;
Figur 3a eine schematisch dargestellte querschnittliche Ansicht auf eine Entnahmeeinrichtung als mögliches Bestandteil des Verschlusselementes;
Figur 3b eine schematisch dargestellte weitere Ansicht eines weiteren Ausführungsbeispiels der Entnahmeeinrichtung gemäss Figur 3a;
Figur 4 eine schematische Ansicht auf eine weitere Vorrichtung in Gebrauchslage.

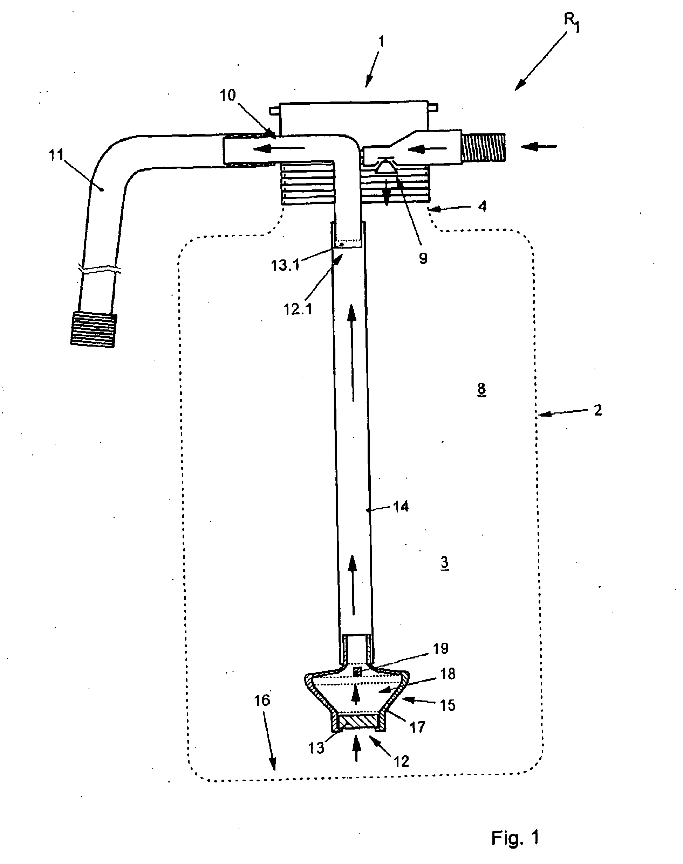

Gemäss Figur 1 weist eine erfindungsgemässe Vorrichtung R₁ ein Verschlusselement 1 auf, welches auf herkömmliche Behälter 2 aufschraubbar oder befestigbar ist.

Die Behälter 2 dienen der Aufnahme von Reifendichtmittel 3 und können aus unterschiedlichsten Materialien, bevorzugt druckfestem Kunststoff hergestellt sein.

Im Bereich eines Behälterhalses 4 ist ein entsprechendes Aussengewinde vorgesehen, auf welches das Verschlusselement 1 aufschraubbar ist.

Das Verschlusselement 1 selbst ist mit einem Einlassstutzen 5 versehen, an welchen eine beliebige Druckquelle 6, insbesondere Kompressor, Druckbehälter mit komprimierter Luft oder Gas anschliessbar ist.

Im Bereich des Einlassstutzens 5 ist im Verschlusselement 1 ein Einlass 7 vorgesehen, der eine Verbindung zwischen Einlassstutzen 5 und einem Behälterinnenraum 8 nach Freigeben eines Einlassverschlusses 9 herstellt. Dabei hat sich als besonders vorteilhaft bei der vorliegenden Erfindung erwiesen, den Einlass 7 lediglich bei Vorliegen eines bestimmten und wählbaren Überdruckes von etwa 3 bar bis 5 bar Druck zu öffnen, um den Behälter 2, insbesondere den Behälterinnenraum 8, mit Überdruck zu beaufschlagen.

Bei Anliegen eines Überdruckes im Einlass 7 bzw. im Einlassstutzen 5 lässt sich der Einlassverschluss 9 automatisch öffnen, um den Behälterinnenraum 8 unter Druck zu setzen.

Dabei kann der Einlassverschluss 9 selbst als Verschlussstopfen, als Ventil, als Rückschlagventil, als Klappe, als Folie ausgebildet sein, um bei Anliegen eines bestimmten und wählbaren Überdruckes eine Verbindung zwischen der Druckquelle 6 und dem Behälterinnenraum 8 herzustellen, um den druckfesten Behälter 2 mit Überdruck zu beaufschlagen.

Ferner ist im Verschlusselement 1 ein Auslass 10 vorgesehen, an welchen aussen ein Anschlussschlauch 11 in beliebiger und bevorzugt in geringer Länge anschliessbar ist, um eine Verbindung zwischen einem hier nicht näher dargestellten Ventil eines Fahrzeugreifens herzustellen. Dabei lässt sich der Anschlussschlauch 11 direkt an das Ventil eines Reifens mit oder ohne Ventileinsatz anschliessen.

Über den Auslass 10 wird eine Verbindung zum Behälterinnenraum 8 hergestellt, wobei über eine Entnahmeöffnung 12, 12.1 direkt oder indirekt Reifendichtmittel 3 aus dem Behälter 2 ausgebracht werden kann.

Damit zur Lagerung beispielsweise in einem Fahrzeug der Behälter 2, gefüllt mit Reifendichtmittel 3, nicht auslaufen kann, ist die Entnahmeöffnung 12, 12.1 mittels zumindest eines Verschlusses13, 13.1 verschlossen.

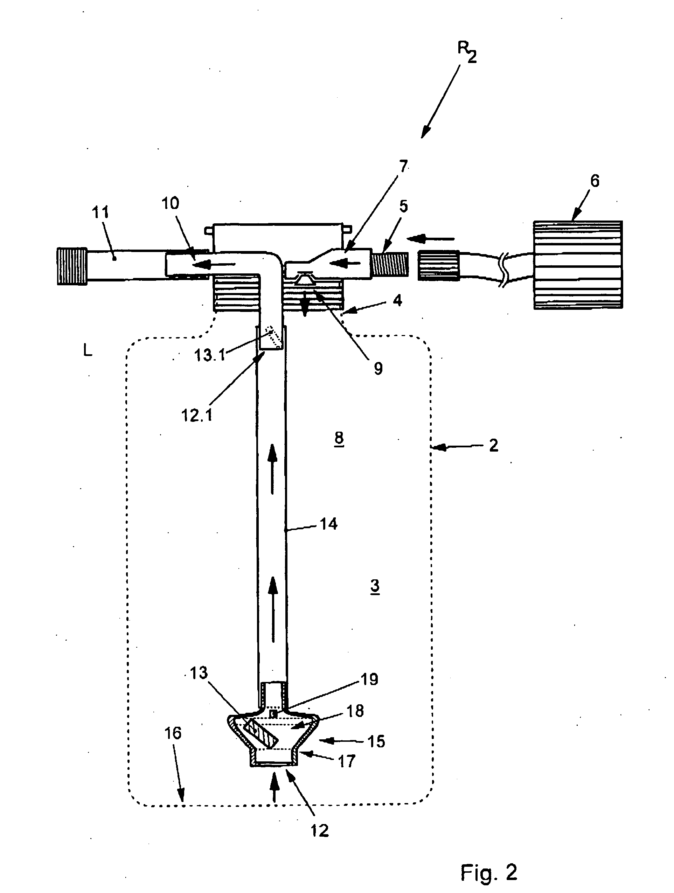

Wie es in dem Ausführungsbeispiel der vorliegenden Erfindung gemäss Figur 1 aufgezeigt ist, kann ein beliebiger Verschluss 13.1 direkt im Bereich des Verschlusselementes 1 bzw. im Bereich des Auslasses 10 vorgesehen sein, der lediglich bei entsprechenden Anliegen eines Überdruckes, wie es in Figur 2 angedeutet ist, die Entnahmeöffnung 12.1 freigibt.

Dabei wird lediglich bei einem bestimmten und wählbaren im Behälterinnenraum 8 vorliegenden Überdruck der Verschluss 13.1 geöffnet und gibt die Entnahmeöffnung 12.1 frei.

Im vorliegenden Ausführungsbeispiel kann über ein Steigrohr 14 eine Entnahmeeinrichtung 15 zum eigentlichen Verschlusselement 1 beabstandet angeordnet sein und befindet sich nahe eines Behälterbodens 16.

Bevorzugt ist die Entnahmeeinrichtung 15 schwerer als das eigentliche Reifendichtmittel bzw. von einer höheren Dichte oder ggf. mit einem Gewicht beschwert, so dass eine Entnahme nahe vom Behälterboden 16 permanent bei stehender oder liegender Flasche gewährleistet wird.

Die Entnahmeeinrichtung 15 selbst weist einen Grundkörper 17 auf, der einen nach innen vergrösserten Innenraum 18 hat. Bevorzugt ist im stirnseitigen Bereich der Verschluss 13 eingesetzt, der bei Vorliegen eines Überdruckes im Behälter 2 in den Innenraum 18 eingedrückt wird, um die Entnahmeöffnung 12 zum Ausbringen von Reifendichtmittel 3 aus dem Behälter 2 freizugeben.

Dabei kann der Verschluss 13 als Verschlussstopfen, wie es in den Figuren 1 und 2 aufgezeigt ist, ausgebildet sein, der dann in den Innenraum 18 des Grundkörpers 17 befördert wird, wobei über zumindest ein Absperrelement 19 ein permanentes Öffnen und Freigeben der Entnahmeöffnung 12 bzw. ein permanentes Ausbringen von Reifendichtmittel 3 aus dem Behälter 2 über den Auslass 10 und den Anschlussschlauch 11 in einen Fahrzeugreifen gewährleistet bleibt.

Dabei soll auch bei der vorliegenden Erfindung daran gedacht sein, dass der entsprechende Verschluss 13.1 direkt nahe des Auslasses 10, bevorzugt dem Behälterinnenraum 8 zugewandt, zugeordnet oder dort vorgesehen sein kann. Hierauf sei die Erfindung nicht beschränkt.

Es hat sich ferner als besonders vorteilhaft bei der vorliegenden Erfindung erwiesen, den Anschlussschlauch 11 besonders kurz auszubilden, insbesondere in einer Länge L von etwa 2 cm bis 8 cm, bevorzugt von 3 cm Länge.

Dies hat den Vorteil, dass über einen kurz gewählten Anschlussschlauch 11 mit hier nicht näher bezifferter Anschlussmutter zum Aufsetzen und Anschliessen an ein Ventil eines Fahrzeugreifens die vollständige Vorrichtung R₂, wie sie in Figur 2 angedeutet ist, am Reifenventil angehängt wird, so dass ein Aufstellen des eigentlichen Behälters 2 auf einem beliebigen Untergrund entfallen kann. Dies erleichtert die Handhabbarkeit wesentlich und verhindert auch ein falsches Anschliessen der Vorrichtung R₂ an einen Fahrzeugreifen.

Ferner hat sich als vorteilhaft bei der vorliegenden Erfindung erwiesen, den Behälter 2 über den Anschlussschlauch 11 hängend, insbesondere freihängend an ein Ventil eines Fahrzeugreifens anzuschliessen und dort hängend dann zum Ausbringen von Reifendichtmittel zu betreiben.

Auf diese Weise wird gewährleistet, dass immer hängend nach unten der Behälter 2 ausgerichtet ist, um das Reifendichtmittel ohne exaktes Ausrichten oder Aufstellen vollständig aus dem Behälter 2 ausbringen zu können.

Dabei kann der Anschlussschlauch 11 gegenüber dem Auslass 10 oder über ein separates Zwischenstück frei drehbar bzw. um seine eigene Achse rotierbar bzw. schwenkbar ausgebildet sein. Dies soll ebenfalls ein anhängendes Anschliessen des Behälters 2 am Ventil eines Fahrzeugreifens erleichtern.

Ferner soll auch im Rahmen der vorliegenden Erfindung liegen, dass der Anschlussschlauch 11 winklig, insbesondere abgeknickt ausgebildet sein kann, um insbesondere einen möglichst geringen Platz beim Verstauen einzunehmen. Ggf. kann im Behälter selbst aussen in die Aussenwandung eine Mulde eingeformt sein, um den abgeknickten Schlauch bei Nichtgebrauch dort unterzubringen.

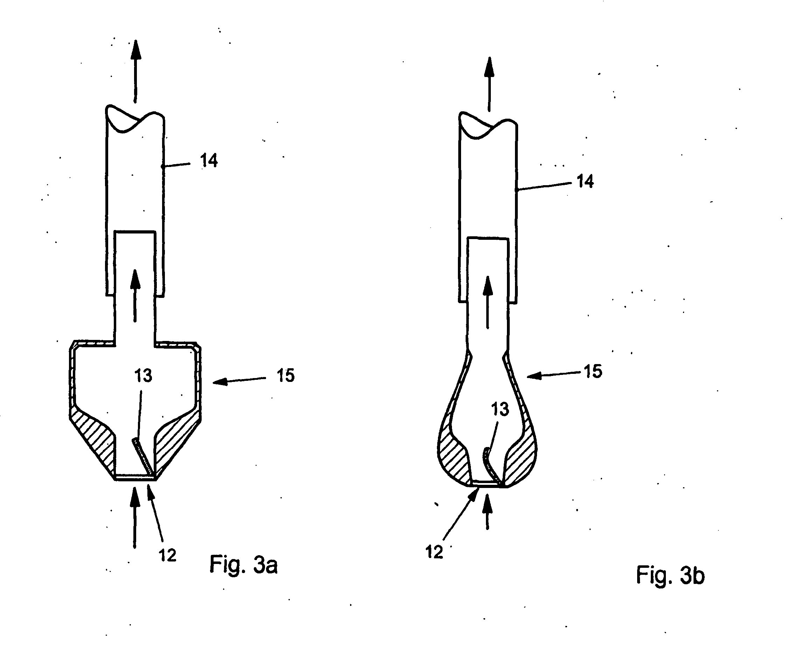

In dem Ausführungsbeispiel der vorliegenden Erfindung gemäss den Figuren 3a und 3b sind jeweils Entnahmeeinrichtungen 15 aufgezeigt, wobei dort eine Entnahmeöffnung 12 über einen Verschluss 13 verschliessbar ist. Dabei kann der Verschluss 13 gemäss Figur 3a als Klappe ausgebildet sein und kann bei Vorliegen eines bestimmbaren Überdruckes im Behälter 2, wie es gestrichelt angedeutet ist, die Entnahmeöffnung 12 freigeben.

In Figur 3b ist der Verschluss als elastisches Element ausgebildet, welches bei Vorliegen eines bestimmten Überdruckes im Behälter 2 die Entnahmeöffnung 12 freigibt.

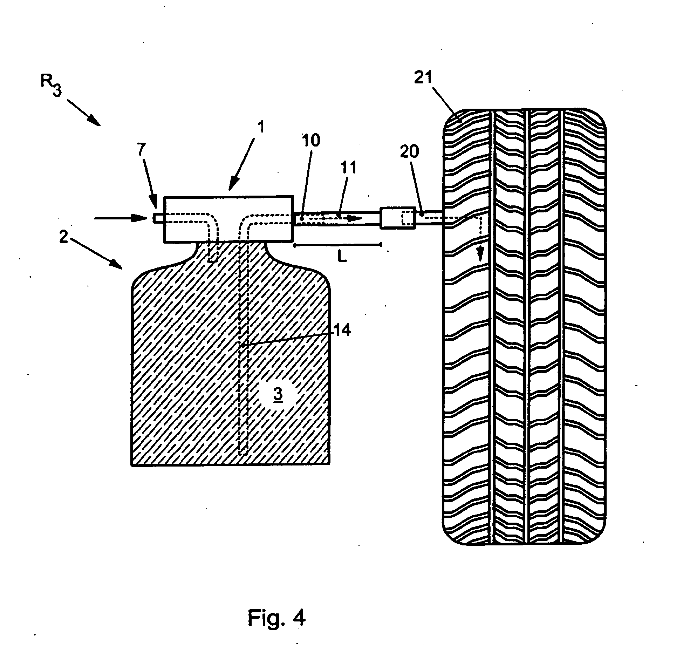

Im weiteren Ausführungsbeispiel der vorliegenden Erfindung gemäss Figur 4 ist eine Vorrichtung R₃ aufgezeigt, bei welcher ein Behälter 2 über den Anschlusssschlauch 11, welcher vorzugsweise kurz und flexibel ausgebildet ist, an ein Ventil 20 eines Fahrzeugreifens 21 anhängbar ist.

Dabei kann über das Verschlusselement 1 und den daran anschliessenen Anschlussschlauch 11 das Reifendichtmittel 3 aus dem Behälter 2 über Druckbeaufschlagung über einen Einlass 7 in den Fahrzeugreifen 21 ausgepumpt werden.

Hierzu ist bevorzugt ein Steigrohr 14 im Behälter 2 vorgesehen, um das Reifendichtmittel vollständig aus dem Behälter 2 auszubringen.

Der Behälter 2 ist bevorzugt aus druckfestem Material gebildet.

Es hat sich bei der vorliegenden Erfindung als vorteilhaft erwiesen, den Behälter 2 auch als flexiblen druckfesten Beutel auszubilden, der zum Ausbringen von Reifendichtmittel mit einer Druckluftquelle über den Einlass 7 unter Druck setzbar ist. Der flexible Beutel kann aus Kunststoff oder Verbundwerkstoffen, wie Aluminium und Kunststoff etc. hergestellt sein.

Ein Vorteil ist durch die Ausgestaltung des Behälters 2 als Beutel, dass dieser sehr leicht und von geringem Gewicht ist und daher für die Fahrzeugindustrie besonders geeignet ist. Dieser lässt sich auch für bestimmte Einbauräume in einer gewünschten Form entsprechend passgenau herstellen und lässt sich leicht nach Gebrauch platzsparend entsorgen.

### Bezugszeichenliste

| | | | | | |
|---|---|---|---|---|---|
| 1 | Verschlusselement | 34 | | 67 | |
| 2 | Behälter | 35 | | 68 | |
| 3 | Reifendichtmittel | 36 | | 69 | |
| 4 | Behälterhals | 37 | | 70 | |
| 5 | Einlassstutzen | 38 | | 71 | |
| 6 | Druckquelle | 39 | | 72 | |
| 7 | Einlass | 40 | | 73 | |
| 8 | Behälterinnenraum | 41 | | 74 | |
| 9 | Einlassverschluss | 42 | | 75 | |
| 10 | Auslass | 43 | | 76 | |
| 11 | Anschlussschlauch | 44 | | 77 | |
| 12 | Entnahmeöffnung | 45 | | 78 | |
| 13 | Verschluss | 46 | | 79 | |
| 14 | Steigrohr | 47 | | | |
| 15 | Entnahmeeinrichtung | 48 | | | |
| 16 | Behälterboden | 49 | | | |
| 17 | Grundkörper | 50 | | R₁ | Vorrichtung |
| 18 | Innenraum | 51 | | R₂ | Vorrichtung |
| 19 | Absperrelement | 52 | | R₃ | Vorrichtung |
| 20 | Ventil | 53 | | | |
| 21 | Fahrzeugreifen | 54 | | L | Länge |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Ausbringen von Reifendichtmittel (3) aus einem Behälter (2), mit einem Verschlusselement (1) mit einem Einlass (7) zum Anschliessen an eine Druckquelle (6), der bei Überdruck einen Einlassverschluss (9) zu einem Behälterinnenraum (8) des Behälters (2) hin öffnet,
**dadurch gekennzeichnet,**
**dass** das Verschlusselement (1) auch einen Auslass (10) mit einem Verschluss (13, 13.1) aufweist, der bei Erzeugung eines vorbestimmten Überdruckes im Behälter (2) den Verschluss (13, 13.1) in einer Entnahmeöffnung (12, 12.1) zum Ausbringen von Reifendichtmittel (3) aus dem Behälter (2) in einen Reifen freigibt.

2. Vorrichtung nach Anspruch 1, **dadurch gekennzeichnet, dass** der Einlass (7) zum Anschliessen einer beliebigen Druckquelle (6), insbesondere der Einlassverschluss (9) als Einlassventil, Rückschlagventil, Stopfen, Verschlussstopfen, Klappe ausgebildet ist.

3. Vorrichtung nach Anspruch 2, **dadurch gekennzeichnet, dass** der Einlass (7) bei Erreichen eines wählbaren Überdruckes, erzeugt durch einen Kompressor, aus einer Gasflasche, den Einlassverschluss (9) öffnet.

4. Vorrichtung nach wenigstens einem der Ansprüche 1 bis 3, **dadurch gekennzeichnet, dass** der Einlassverschluss (9) bei einem Überdruck von ca. 2 bar bis 5 bar den Einlass (7) freigibt.

5. Vorrichtung nach wenigstens einem der Ansprüche 1 bis 4, **dadurch gekennzeichnet, dass** der Verschluss (13, 13.1) die Entnahmeöffnung (12, 12.1) im Bereich des Verschlusselementes (1) oder in einer separaten über ein Steigrohr (14) beabstandeten Entnahmeeinrichtung (15) bei Vorliegen eines bestimmten und wählbaren Überdruckes im Behälter (2) freigibt.

6. Vorrichtung nach Anspruch 5, **dadurch gekennzeichnet, dass** die Entnahmeeinrichtung (15) aus einem Grundkörper (17) gebildet ist, in welchem der Verschluss (13) zum Freigeben der Entnahmeöffnung (12) vorgesehen ist.

7. Vorrichtung nach Anspruch 6, **dadurch gekennzeichnet, dass** der Verschluss (13) bei Vorliegen von Überdruck im Behälter (2) die Entnahmeöffnung (12) im Grundkörper (17) freigibt, um Reifendichtmittel (3) direkt über einen Auslass (10) oder indirekt über ein Steigrohr (14) zu einem Anschlussschlauch (11) zum Anschliessen an ein Ventil eines Reifens auszubringen.

8. Vorrichtung nach Anspruch 6 oder 7, **dadurch gekennzeichnet, dass** der Verschluss (13) als Stopfen in die Entnahmeöffnung (12) des Grundkörper (17) eingesetzt ist.

9. Vorrichtung nach wenigstens einem der Ansprüche 6 bis 8, **dadurch gekennzeichnet, dass** der Verschluss (13.1) zum Verschliessen der Entnahmeöffnung (12.1) im Auslass (10) vorgesehen ist, wobei zum Ausbringen von Reifendichtmittel (3) aus dem Behälter (2) der Behälter (2) über Kopf aufstellbar ist.

10. Vorrichtung nach wenigstens einem der Ansprüche 6 bis 8, **dadurch gekennzeichnet, dass** die Entnahmeeinrichtung (15) über das Steigrohr (14) mit integriertem Verschluss (13) beabstandet an das Verschlusselement (1) anschliesst und nahe eines Behälterbodens (16) des Behälters (2) angeordnet ist.

11. Vorrichtung nach wenigstens einem der Ansprüche 5 bis 10, **dadurch gekennzeichnet, dass** ein spezifisches Gewicht der Entnahmeeinrichtung (15) höher ist als ein spezifisches Gewicht des Reifendichtmittels (3).

12. Vorrichtung nach wenigstens einem der Ansprüche 5 bis 11, **dadurch gekennzeichnet, dass** ein spezifisches Gewicht des Verschlusses (13) geringer ist als ein spezifisches Gewicht des Reifendichtmittels (3).

13. Vorrichtung nach wenigstens einem der Ansprüche 6 bis 12, **dadurch gekennzeichnet, dass** der Grundkörper (17) zur Aufnahme des Verschlusses (13) nach einem Eindrücken einen vergrösserten Innenraum (18) und zumindest ein Absperrelement (19) aufweist, um ein Ausströmen des Reifendichtmittels (3) durch das Steigrohr (14) zu gewährleisten.

14. Vorrichtung nach wenigstens einem der Ansprüche 5 bis 13, **dadurch gekennzeichnet, dass** der Verschluss (13, 13.1) als Klappe oder als elastisch verformbares Element ausgebildet ist.

15. Vorrichtung nach wenigstens einem der Ansprüche 1 bis 14, **dadurch gekennzeichnet, dass** das Verschlusselement (1) über einen Anschlussschlauch (11) an ein Ventil eines Fahrzeugreifens zum Einbringen von Reifendichtmittel (3) in den Reifen anschliessbar ist.

16. Vorrichtung nach Anspruch 15, **dadurch gekennzeichnet, dass** über den Anschlussschlauch (11) der Behälter (2) an einem Ventil eines Fahrzeugreifens anhängbar ist.

17. Vorrichtung nach Anspruch 16, **dadurch gekennzeichnet, dass** der Anschlussschlauch (11) eine geringe Länge (L) von etwa 2 cm bis 8 cm, insbesondere 3 cm aufweist.

18. Vorrichtung nach Anspruch 16 oder 17, **dadurch gekennzeichnet, dass** der Behälter (2) an dem Ventil des Fahrzeugreifens nach unten hängend angeordnet ist.

19. Vorrichtung nach wenigstens einem der Ansprüche 15 bis 18, **dadurch gekennzeichnet, dass** der Anschlussschlauch (11) im Bereich des Auslasses (10) frei drehbar und/oder schwenkbar um seine Mittelachse gelagert ist.

20. Vorrichtung nach wenigstens einem der Ansprüche 15 bis 21, **dadurch gekennzeichnet, dass** der Anschlussschlauch (11) abgewinkelt, insbesondere abgeknickt ausgebildet ist.

21. Vorrichtung nach Anspruch 20, **dadurch gekennzeichnet, dass** der abgeknickte Anschlussschlauch (11) seitlich am Behälter (2) anliegt oder in einer separaten Aufnahmemulde im abgeknickten Zustand dort untergebracht, insbesondere gelagert ist.

22. Vorrichtung nach wenigstens einem der Ansprüche 1 bis 21, **dadurch gekennzeichnet, dass** der Behälter (2) als druckfester Behälter ausgebildet ist.

23. Vorrichtung nach wenigstens einem der Ansprüche 1 bis 21, **dadurch gekennzeichnet, dass** der Behälter (2) als flexibler Beutel ausgebildet ist, welcher bis etwa 10 bar Druck druckfest ausgeformt ist.

24. Vorrichtung nach Anspruch 22 oder 23, **dadurch gekennzeichnet, dass** der Behälter (2) aus druckfestem Kunststoff oder Verbundmaterialien aus Kunststoff und Metall, insbesondere Kunststoff und Aluminium, ausgebildet ist.

## Claims

1. Device for discharging tyre sealant (3) from a container (2), having a closure element (1) with an inlet (7) for connection to a pressure source (6), which inlet (7) in the event of an excess pressure opens an inlet closure (9) in the direction of a container interior (8) of the container (2),
**characterized in**
**that** the closure element (1) also comprises an outlet (10) with a closure (13, 13.1), which upon generation of a predetermined excess pressure in the container (2) releases the closure (13, 13.1) in a removal opening (12, 12.1) for the purpose of discharging tyre sealant (3) from the container (2) into a tyre.

2. Device according to claim 1, **characterized in that** the inlet (7) is designed for the connection of any desired pressure source (6), in particular the inlet closure (9) takes the form of an inlet valve, non-return valve, stopper, plug, flap.

3. Device according to claim 2, **characterized in that** the inlet (7) in the event of attainment of a selectable excess pressure, generated by a compressor, from a gas cylinder, opens the inlet closure (9).

4. Device according to at least one of claims 1 to 3, **characterized in that** in the event of an excess pressure of ca. 2 bar to 5 bar the inlet closure (9) releases the inlet (7).

5. Device according to at least one of claims 1 to 4, **characterized in that** the closure (13, 13.1) releases the removal opening (12, 12.1) in the region of the closure element (1) or in a separate removal device (15) spaced apart by means of a rising pipe (14) in the event of a specific and selectable excess pressure in the container (2).

6. Device according to claim 5, **characterized in that** the removal device (15) is formed by a basic body (17), in which the closure (13) for releasing the removal opening (12) is provided.

7. Device according to claim 6, **characterized in that** in the event of excess pressure in the container (2) the closure (13) releases the removal opening (12) in the basic body (17) in order to discharge tyre sealant (3) directly through an outlet (10) or indirectly via a rising pipe (14) to a connecting hose (11) for connection to a valve of a tyre.

8. Device according to claim 6 or 7, **characterized in that** the closure (13) is inserted in the form of a stopper into the removal opening (12) of the basic body (17).

9. Device according to at least one of claims 6 to 8, **characterized in that** the closure (13.1) for closing the removal opening (12.1) is provided in the outlet (10), wherein for discharging tyre sealant (3) from the container (2) the container (2) is invertable.

10. Device according to at least one of claims 6 to 8, **characterized in that** the removal device (15) is connected spaced apart by means of the rising pipe (14) with integrated closure (13) to the closure element (1) and is disposed close to a container base (16) of the container (2).

11. Device according to at least one of claims 5 to 10, **characterized in that** a unit weight of the removal device (15) is higher than a unit weight of the tyre sealant (3).

12. Device according to at least one of claims 5 to 11, **characterized in that** a unit weight of the closure (13) is lower than a unit weight of the tyre sealant (3).

13. Device according to at least one of claims 6 to 12, **characterized in that** the basic body (17) for receiving the closure (13), after it is pressed in, has an enlarged inner space (18) and at least one shut-off element (19) to guarantee an outward flow of the tyre sealant (3) through the rising pipe (14).

14. Device according to at least one of claims 5 to 13, **characterized in that** the closure (13, 13.1) takes the form of a flap or an elastically deformable element.

15. Device according to at least one of claims 1 to 14, **characterized in that** the closure element (1) is connectable by a connecting hose (11) to a valve of a vehicle tyre in order to introduce tyre sealant (3) into the tyre.

16. Device according to claim 15, **characterized in that** by means of the connecting hose (11) the container (2) is attachable to a valve of a vehicle tyre.

17. Device according to claim 16, **characterized in that** the connecting hose (11) has a short length (L) of approximately 2 cm to 8 cm, in particular 3 cm.

18. Device according to claim 16 or 17, **characterized in that** the container (2) is disposed suspended downward on the valve of the vehicle tyre.

19. Device according to at least one of claims 15 to 18, **characterized in that** the connecting hose (11) is mounted in the region of the outlet (10) so as to be freely rotatable and/or pivotable about its centre line.

20. Device according to at least one of claims 15 to 21, **characterized in that** the connecting hose (11) is of an angular, in particular bent design.

21. Device according to claim 20, **characterized in that** the bent connecting hose (11) lies laterally adjacent to the container (2) or is accommodated, in particular stored in a separate receiving trough in the bent state.

22. Device according to at least one of claims 1 to 21, **characterized in that** the container (2) takes the form of a pressure-proof container.

23. Device according to at least one of claims 1 to 21,
**characterized in that** the container (2) takes the form of a flexible pouch that is configured to be pressure-proof up to approximately 10 bar.

24. Device according to claim 22 or 23, **characterized in that** the container (2) is constructed from pressure-proof plastics material or composite materials comprising plastics material and metal, in particular plastics material and aluminium.

## Revendications

1. Dispositif pour expulser d'un récipient (2) un produit colmatant de pneu (3), avec un élément d'obturation (1) avec une entrée (7) destinée à être raccordée à une source de pression (6) qui ouvre, en cas de surpression, un obturateur d'entrée (9) vers un espace intérieur (8) du récipient (2),
**caractérisé par le fait**
**que** l'élément d'obturation (1) présente également une sortie (10) avec un obturateur (13, 13.1) qui, en cas de génération d'une surpression prédéterminée dans le récipient (2), libère l'obturateur (13, 13.1) dans une ouverture de prélèvement (12, 12.1) pour expulser du récipient (2) du produit colmatant de pneu (3) dans un pneu.

2. Dispositif selon la revendication 1, **caractérisé par le fait que** l'entrée (7) pour le raccordement d'une source de pression (6) quelconque, en particulier l'obturateur d'entrée (9), est réalisée sous forme de soupape d'entrée, de clapet de retenue, de bouchon, de bouchon obturateur, de clapet.

3. Dispositif selon la revendication 2, **caractérisé par le fait que** l'entrée (7) ouvre, lorsqu'une surpression sélectionnable, générée par un compression, d'une bouteille de gaz est atteinte, l'obturateur d'entrée (9).

4. Dispositif selon au moins l'une des revendications 1 à 3, **caractérisé par le fait que** l'obturateur d'entrée (9) libère, à une surpression d'environ 2 bars à 5 bars, l'entrée (7).

5. Dispositif selon au moins l'une des revendications 1 à 4, **caractérisé par le fait que** l'obturateur (13, 13.1) libère l'ouverture de prélèvement (12, 12.1) à l'endroit de l'élément d'obturation (1) ou dans un dispositif de prélèvement séparé distant, par l'intermédiaire d'un tube montant (14), en cas de présence d'une surpression déterminée et sélectionnable dans le récipient (2).

6. Dispositif selon la revendication 5, **caractérisé par le fait que** le dispositif de prélèvement (15) consiste en un corps de base (17) dans lequel est prévu l'obturateur (13) destiné à libérer l'ouverture de prélèvement.

7. Dispositif selon la revendication 6, **caractérisé par le fait que** l'obturateur (13) libère, en cas de présence de surpression dans le récipient, l'ouverture de prélèvement (12) dans le corps de base (17), pour expulser du produit colmatant de pneu (3) directement par l'intermédiaire d'une sortie (10) ou indirectement par l'intermédiaire d'un tuyau montant (14) vers un flexible de raccordement (11) destiné à être raccordé à une soupape de pneu.

8. Dispositif selon la revendication 6 ou 7, **caractérisé par le fait que** l'obturateur (13) est placé comme bouchon dans l'ouverture de prélèvement (12) du corps de base (17).

9. Dispositif selon au moins l'une des revendications 6 à 8, **caractérisé par le fait que** l'obturateur (13.1) destiné à obturer l'ouverture de prélèvement (12) est prévu dans la sortie (10), le récipient (2) pouvant être placé dans le sens dessus dessous pour l'expulsion du récipient (2) de produit colmatant de pneu (3).

10. Dispositif selon au moins l'une des revendications 6 à 8, **caractérisé par le fait que** le dispositif de prélèvement (15) se raccorde, par l'intermédiaire du tuyau montant (14) à obturateur (13) intégré, à une distance à l'élément d'obturation (1) et est disposé près d'un fond (16) du récipient (2).

11. Dispositif selon au moins l'une des revendications 5 à 10, **caractérisé par le fait qu'**un poids spécifique du dispositif de prélèvement (15) est supérieur à un poids spécifique du produit colmatant de pneu (3).

12. Dispositif selon au moins l'une des revendications 5 à 10, **caractérisé par le fait qu'**un poids spécifique de l'obturateur (13) est inférieur à un poids spécifique du produit colmatant de pneu (3).

13. Dispositif selon au moins l'une des revendications 6 à 12, **caractérisé par le fait que** le corps de base (17) présente pour recevoir l'obturateur (13), après un enfoncement, un espace intérieur agrandi (18) et au moins un élément de blocage (19), pour garantir un écoulement du produit colmatant de pneu (3) à travers le tube montant (14).

14. Dispositif selon au moins l'une des revendications 5 à 13, **caractérisé par le fait que** l'obturateur (13, 13.1) est réalisé sous forme de clapet ou d'élément déformable élastiquement.

15. Dispositif selon au moins l'une des revendications 1 à 14, **caractérisé par le fait que** l'élément d'obturation (1) peut être raccordé, par l'intermédiaire d'un flexible de raccordement (11), à une soupape de pneu de véhicule, pour introduire dans le pneu du produit colmatant de pneu (3).

16. Dispositif selon la revendication 15, **caractérisé par le fait que** le récipient (2) peut, par l'intermédiaire du flexible de raccordement (11), être accroché à une soupape de pneu de véhicule.

17. Dispositif selon la revendication 16, **caractérisé par le fait que** le flexible de raccordement (11) présente une faible longueur (L) d'environ 2 cm à 8 cm, en particulier de 3 cm.

18. Dispositif selon la revendication 16 ou 17, **caractérisé par le fait que** le récipient (2) est disposé sur la soupape de pneu de véhicule de manière suspendue vers le bas.

19. Dispositif selon au moins l'une des revendications 15 à 18, **caractérisé par le fait que** le flexible de raccordement (11) est monté de manière à pouvoir tourner et/ou pivoter librement autour de son axe médian à l'endroit de la sortie (10).

20. Dispositif selon au moins l'une des revendications 15 à 19, **caractérisé par le fait que** le flexible de raccordement (11) est réalisé d'angle, en particulier plié.

21. Dispositif selon la revendication 20, **caractérisé par le fait que** le flexible de raccordement plié (11) s'appuie latéralement contre le récipient (2) ou est placé, en particulier monté, à l'état plié dans une auge de réception.

22. Dispositif selon au moins l'une des revendications 1 à 21, **caractérisé par le fait que** le récipient (2) est réalisé sous forme de récipient résistant à la pression.

23. Dispositif selon au moins l'une des revendications 1 à 21, **caractérisé par le fait que** le récipient (2) est réalisé sous forme de sachet flexible qui est réalisé de manière résistant à une pression de jusqu'à environ 10 bars.

24. Récipient selon la revendication 22 ou 23, **caractérisé par le fait que** le récipient (2) est réalisé en plastique résistant à la pression ou en matériaux composites de plastique et de métal, en particulier de plastique et d'aluminium.
